# EUROPEAN PATENT APPLICATION

(11) **EP 2 663 060 A1**
(43) Date of publication of application: **13.11.2013**
(21) Application number: 12167030.1
(22) Date of filing: 07.05.2012
(51) Int. Cl.: H04M 1/725

(54) **A mobile electronic device communication with an external device for selecting elements from a list**

(71) Applicant: BlackBerry Limited, Waterloo, ON N2L 3W8 (CA)
(72) Inventor: Griffin, Jason, Tyler, Waterloo, Ontario N2L 3W8 (CA); Ladouceur, Norman, Miner, Wingham, Ontario N0G 2W0 (CA); Fyke, Steven, Henry, Waterloo, Ontario N2L 3W8 (CA); Legg, Daniel, James, Seattle, WA Washington 98122 (US)
(74) Representative: MERH-IP Matias Erny Reichl Hoffmann

(57) **Abstract**

A mobile electronic device (107) for selecting elements from a list is provided. The mobile electronic device (107) comprises a communication interface (201) enabled to communicate with an output device (103), the output device (103) enabled to provide feedback for selecting elements from a list; a first input element (107-1) which, when actuated, causes the communication interface (201) to transmit a coarse selection of the elements of the list, the coarse selection provided at the output device (107); and a second input element (107-2) which, when actuated, causes the communication interface (201) to transmit a fine selection of the elements of the list, the fine selection provided at the output device (103).

## Description

### FIELD

The specification relates generally to mobile electronic devices, and specifically to a mobile electronic device for selecting elements from a list.

### BACKGROUND

The evolution of computers is currently quite active in the mobile device environment. Text entry can be challenging under certain conditions however, where motor skills for text entry are reduced or where access to a mobile device is limited.

### SUMMARY

An aspect of the specification provides a mobile electronic device comprising: a communication interface enabled to communicate with an output device, the output device enabled to provide feedback for selecting elements from a list; a first input element which, when actuated, causes the communication interface to transmit a coarse selection of the elements of the list, the coarse selection provided at the output device; and a second input element which, when actuated, causes the communication interface to transmit a fine selection of the elements of the list, the fine selection provided at the output device.

The communication interface can comprise one or more of: a wireless communication interface for wireless communication with the output device; and a wired communication interface for wired communication with the output device.

The mobile electronic device can further comprise the output device.

The output device can comprise one or more of a visual output device, a display, a heads-up display, an audible output device, a speaker, headphones, a second mobile electronic device, and a Bluetooth™ device.

The mobile electronic device can further comprise: a memory storing the list; and, a processor enabled to select the elements from the list upon actuation of one or more of the first input element and the second input element.

The communication interface can be enabled to transmit an indication of one or more of the coarse selection and the fine selection, the indication for processing at the output device such that the output device selects a given element from the list in response to receiving the indication.

The list can comprise a textual list with the elements arranged in alphabetical order; the coarse selection can comprise a selection of groups of the elements in the textual list; and the fine selection can comprise a selection of individual elements of a last selected group in the coarse selection.

One or more of the first input element and the second input element can comprise a wheel actuatable via rotation.

The first input element can comprise a first wheel actuatable via rotation to effect the coarse selection, and the second input element can comprise a second wheel actuatable via rotation to effect the fine selection.

The mobile electronic device can further comprise at least one button for effecting additional selections from the list.

One or more of the first input element and the second input element can comprise at least one of a capacitive pad and a touch sensitive pad.

One or more of the first input element and the second input element can comprise at least one button.

One of the first input element and the second input element can comprise one or more of a wheel, a touch pad and a capacitive pad and the other of the first input element and the second input element can comprise at least one button.

The first input element can comprise the second input element, wherein the first input element can be placed in a coarse selection mode for effecting the coarse selection of the elements of the list and the first input element can be further placed in a fine selection mode to behave as the second input element for effecting the fine selection of the elements of the list.

The mobile electronic device can further comprise a touchpad wherein the first input element can comprise detection of actuation of the touchpad in a first direction and the second input element can comprise detection of actuation of the touchpad in a second direction different from the first direction.

The first input element and the second input element each comprise one or more of: a wheel, a button, a touchpad, a touch sensitive pad, a capacitive pad, a scroll key, a thumbwheel, a tabbed scroll key, and a directional pad

The mobile electronic device can further comprise a handle for holding the mobile electronic device.

The mobile electronic device can further comprise grooves for holding the mobile electronic device between fingers.

The mobile electronic device can further comprise a body, the first input element and the second input element mounted on the body, and grooves in the body for holding the electronic device between fingers.

The mobile electronic device can further comprise apparatus for mounting the mobile electronic device on one or more of clothing, a belt, jewellery, a watch, a necklace and a firearm.

The mobile electronic device can be sealed against one or more of contaminants, water and moisture.

### BRIEF DESCRIPTIONS OF THE DRAWINGS

For a better understanding of the various implementations described herein and to show more clearly how they may be carried into effect, reference will now be made, by way of example only, to the accompanying drawings in which:

Fig. 1 depicts a system for selecting elements from a list, according to non-limiting implementations.

Fig. 2 depicts a schematic diagram of a device for selecting elements from a list, according to non-limiting implementations.

Fig. 3 depicts a schematic diagram of an output device for selecting elements from a list, according to non-limiting implementations.

Fig. 4 depicts a list arranged in groups for coarse and fine selection of elements, according to non-limiting implementations.

Figs. 5A-5E depict a sequence in which the system of Fig. 1 is used to select an element from a list, according to non-limiting implementations.

Figs. 6A-6D depict a sequence in which the system of Fig. 1 is used to select elements from a list, according to non-limiting implementations.

Fig. 7 depicts a system for selecting elements from a list, according to non-limiting implementations.

Fig. 8 depicts a system for selecting elements from a list, according to non-limiting implementations.

Fig. 9 depicts a system for selecting elements from a list, according to non-limiting implementations.

Figs. 10, 11, 12, 13, 14A-14B, 15A-D, 16A-16B, and 17 each depict a device for selecting elements from a list, according to non-limiting implementations.

### DETAILED DESCRIPTION

In general, this disclosure is directed to a mobile electronic device and techniques for using such a device. In general, mobile electronic devices represent electronic devices that are readily movable from place to place. Such devices typically include a portable power supply, such as a rechargeable battery. Such devices may be handheld, that is, sized and shaped to be held or carried in a human hand. Some electronic devices (some of which may be readily movable from place to place and some of which may not), such as smart phones, tablet computers, televisions, portable computers, navigation devices, heads up displays and the like, may include an output device (such as a display or an audible output device) that can present a list of elements to a user. A list of elements may comprise, for example, a roster of names or a set of menu options. A user making a selection from the list may cause, for example, a function to occur or an operation to be undertaken or a message to be sent or a command to be entered. Some electronic devices having output devices also include input devices that a user may use to select the item from the list, but in some cases, such built-in input devices may be unusable, inconvenient or ill-suited to circumstances. For instance, some individuals may have reduced motor skills, which impair their abilities to use such built-in input devices. In another example, individuals in a wet or sandy or otherwise harsh environment may find that the built-in input devices may be adversely affected by the environment. In a further example, an individual in a military or combat situation may prefer an input device that is more compact and more lightweight than a typical input device. This specification describes various embodiments of a mobile electronic device that includes first and second input elements, and which may be used to select elements from a list.

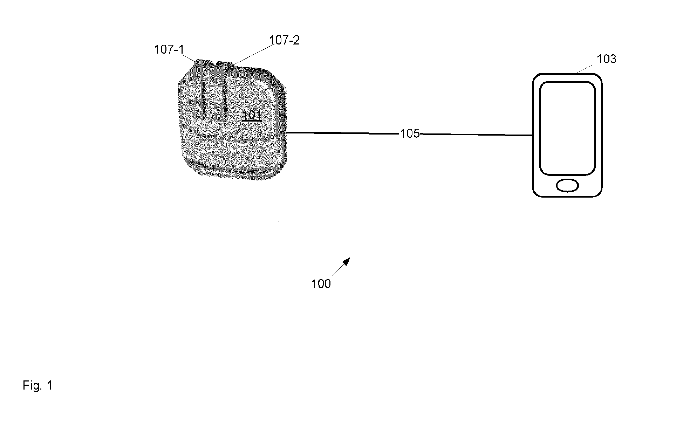

Fig. 1 depicts a system 100 for selecting elements from a list, according to non-limiting implementations. System 100 comprises a mobile electronic device 101 and an output device 103 in communication via a link 105. Mobile electronic device 101 will interchangeably be referred to herein as device 101. Similarly, output device 103 will interchangeably be referred to herein as device 103. This convention will be used throughout the specification. As will be presently explained, device 101 is enabled to communicate with output device 103, for example via link 105. Device 103 is generally enabled to provide feedback for selecting elements from a list, for example via audio or visual output. Device 101 further comprises a first input element 107-1 which, when actuated, causes device 101 to transmit a coarse selection of the elements of the list, the coarse selection provided at device 103. Device 101 further comprises a second input element 107-2 which, when actuated, causes device 101 to transmit a fine selection of the elements of the list, the fine selection provided at device 103. Input elements 107-1, 107-2 will hereafter be referred to collectively as input elements 107 and generically as an input element 107. This convention will be used throughout the specification.

Link 105 comprises any combination of wired and/or wireless links, wired and/or wireless devices and/or wired and/or wireless networks, including but not limited to any combination of USB (universal serial bus) cables, serial cables, wireless links, cell-phone links, cellular network links (including but not limited to 2G, 2,5G, 3G, 4G+, and the like) wireless data, Bluetooth™ links, Zigbee™ links, NFC (near field communication) links, WiFi links, WiMax links, packet based links, the Internet, analog networks, the PSTN (public switched telephone network), access points, and the like, and/or a combination. In particular non-limiting implementations, however, link 105 comprises a local link between devices 101, 103, including but not limited to a cable, a Bluetooth™ links, Zigbee™ links, and an NFC link. For purposes of simplification and illustration, it will be assumed that link 105 is wireless.

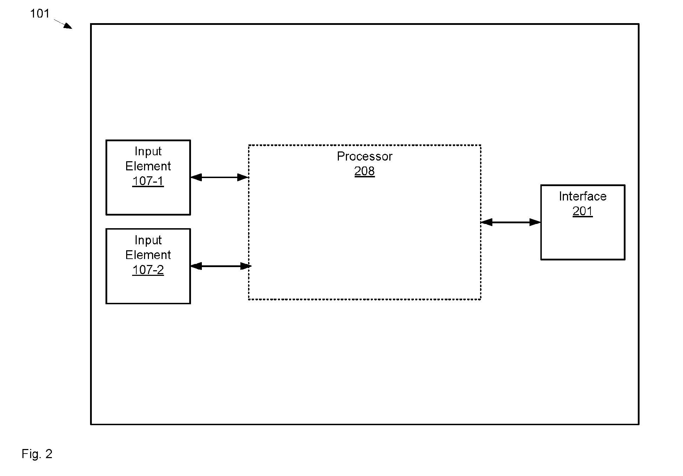

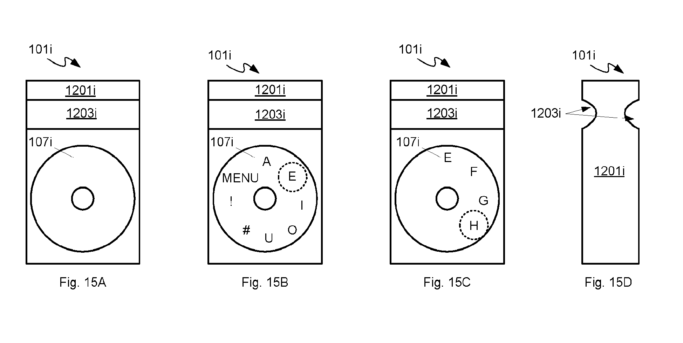

Attention is directed to Fig. 2, which depicts a schematic diagram of device 101 according to non-limiting implementations. It should be emphasized that the structure in Fig. 2 is purely an example, and other structures are within the scope of present implementations. Device 101 comprises two input elements 107 generally enabled to receive input data, and can comprise any combination of wheels, buttons, click wheels, touchpads, capacitive pads, scroll keys, thumbwheels, tabbed scroll keys, directional pad input devices. Other input devices, with any form or forms of actuation, are within the scope of present implementations. While two input elements 107 are contemplated at device 101, it is appreciated that the number of input elements 107 are reduced compared, for example, to a keyboard and/or a keypad. In other words, input elements 107 are enabled for coarse and fine selection of elements in a list, for example, but are not mapped to specific elements in a one-to-one relationship as might occur at a keyboard. In some implementations, only one input element is contemplated, the one input element switchable between a coarse input mode and a fine input mode; for example see Figs. 15A-15D described below. Selection of elements from a list will be presently explained.

It is further appreciated that in example implementations depicted in Fig. 1, each input element 107 comprises a wheel. Specifically, each input element 107 comprises a wheel actuatable via rotation: input element 107-1 comprises a first wheel actuatable via rotation to effect a coarse selection, and input element 107-2 comprises a second wheel actuatable via rotation to effect a fine selection as will presently be explained. Further each input element 107 comprises one or more detectors (not depicted) and the like for determining when each wheel is actuated and/or what degree of actuation has occurred. In other words, device 101 can be enabled to determine how much each wheel has been rotated. For example each input element 107 can comprise a scroll wheel and the like.

It is further appreciated that input elements 107 are in communication with a communication interface 201, interchangeably referred to hereafter as interface 201, which can be implemented as one or more radios configured to communicate over link 105. In general, it will be understood that interface 201 is configured to correspond with the network architecture that is used to implement link 105. In other implementations a plurality of links with different protocols can be employed and thus interface 201 can comprise a plurality of interfaces to support each link.

In general, interface 201 is enabled to communicate with output device 103 to provide feedback for selecting elements from a list. For example, interface is enabled to transmit an indication of one or more of a coarse selection and a fine selection by one or more of input elements 107, the indication for processing at device 103 such that device 103 selects a given element from the list in response to receiving the indication.

In general, interface 201 can comprise one or more of: a wireless communication interface for wireless communication with device 103; and a wired communication interface for wired communication with device 103. In other words, in some implementations link 105 can comprise a cable, while in other implementations link 105 can comprise a wireless connection between devices 101, 103. In yet further implementations, link 105 can comprise a combination thereof.

In some implementations, device 101 further comprises a processor 208 (which can be implemented as a plurality of processors) enabled to accept input data from each of input elements 107 and transmit the input data to device 103 via interface 201. In other words, when present, processor 208 can be enabled to mediate communication between input elements 107 and interface 201.

Further functionality of device 101 will be described below.

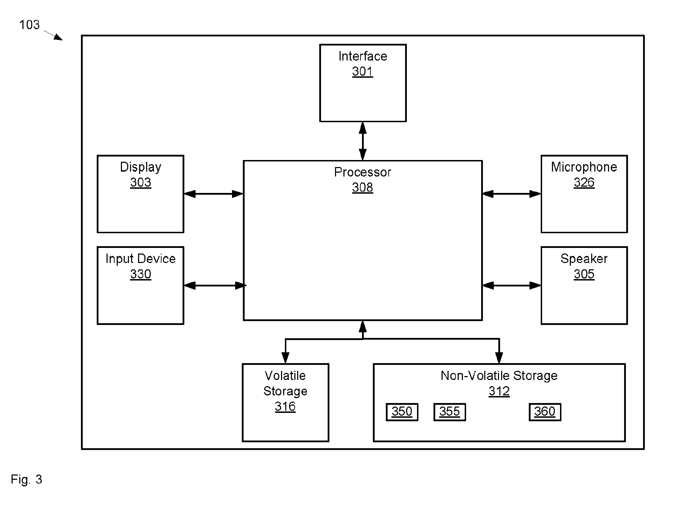

Attention is directed to Fig. 3, which depicts a schematic diagram of device 103 according to non-limiting implementations. It should be emphasized that the structure in Fig. 3 is purely an example, and other structures are within the scope of present implementations.

In depicted implementations, device 103 comprises a communication interface 301 similar to communication interface 201, and generally enabled to receive output from device 101 via link 105.

Further, device 103 comprises at least one feedback device, for example one or more of a display 303 and a speaker 305. Display 303 comprises any one of or combination of CRT (cathode ray tube) and/or flat panel displays (e.g. LCD (liquid crystal display), plasma, OLED (organic light emitting diode), capacitive or resistive touchscreens, and the like). Speaker 305, when present, comprises any speaker for providing sound data at device 101. It is further appreciated that each of display 303 and speaker 305 are enabled to provide feedback for selecting elements from a list. In particular, display 303 can provide visual feedback and speaker 305 can provide audio feedback.

Indeed, it is appreciated that device 103 can comprise any combination of feedback and/or output devices, including but not limited to one or more of a visual output device, a display, a heads-up display, an audible output device, and a speaker. In yet further implementations, device 103 can comprise and/or can be connectable to headphones, a second mobile electronic device, and a Bluetooth™ device. In these implementations, it is appreciated that headphones, a second mobile electronic device, and a Bluetooth™ device can be connected to interface 301 via any suitable wired and/or wireless link.

Device 103 further comprises a processor 308 (which can be implemented as a plurality of processors). Processor 308 is configured to communicate with a non-volatile storage unit 312 (e.g. Erasable Electronic Programmable Read Only Memory ("EEPROM"), Flash Memory) and a volatile storage unit 316 (e.g. random access memory ("RAM")). Programming instructions that implement the functional teachings of device 103 as described herein are typically maintained, persistently, in non-volatile storage unit 312 and used by processor 308 which makes appropriate utilization of volatile storage 316 during the execution of such programming instructions. Non-volatile storage unit 312 and volatile storage 316 are examples of computer readable media that can store programming instructions executable on processor 308. Furthermore, non-volatile storage unit 312 and volatile storage 316 are also examples of memory units and/or memory modules.

Processor 308 in turn can also be configured to communicate with display 303 and speaker 305, and optionally a microphone 326. Microphone 326, when present, comprises any microphone for receiving sound, which can be converted to sound data. It is appreciated that microphone 326 and speaker 305 can be used in combination at device 103 to conduct a voice call. In these implementations interface 228 can be further enabled to communicate via a communications network such as a cell network, the Internet, the PSTN (Public Switched Telephone Network) or the like. Further, in these implementations, device 103 can be used for one or more of wired and/or wireless voice (e.g. telephony), and wired and/or wireless data communications (e.g. email, web browsing, text, and the like).

In some implementations device 103 can comprise an input device 330 generally enabled to receive input data to conduct data and/or telephony communications and to generally operate device 103. Input device 330 can comprise any combination of input devices, including but not limited to a keyboard, a keypad, a pointing device, a mouse, a track wheel, a trackball, a touchpad, a touch screen and the like. Other input devices are within the scope of present implementations.

Non-volatile storage 312 generally stores a list 350 of elements and at least one application 355 which, when processed by processor 308, enables processor 308 to one or more of: control display 303 to render a representation feedback for selecting elements from list 350; and/or control speaker 305 to provide audible feedback for selecting elements from list 350. Non-volatile storage 312 can further comprise a buffer 360 for storing selections from list 350.

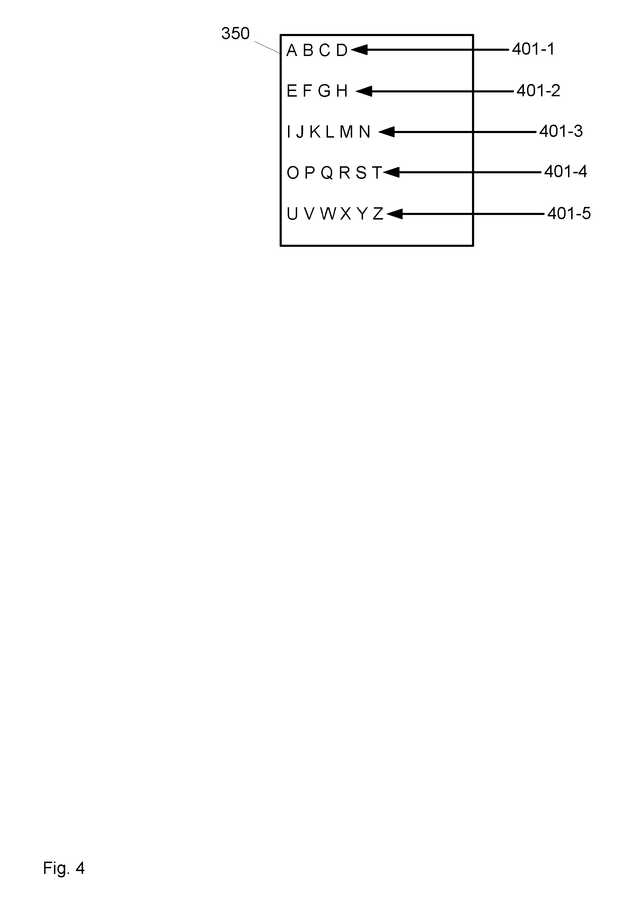

A non-limiting example of list 350 is depicted in Fig. 4. Specifically, in Fig. 4, list 350 comprises a textual list of the letters of the English alphabet arranged in alphabetical order, wherein each element of list 350 comprises a letter (A, B, C, etc.). Further it is apparent from Fig. 4 that elements of list 350 have been alphabetically arranged by vowel grouping into groups 401-1, 401-2, 401-3, 401-4, 401-5, each group starting with a vowel "A", "E", "I", "O", "U", and ending with a letter just before the next vowel in list 350. The last group 401-5 ends with "Z". In other implementations, list 350 can comprise letters and/or characters of any alphabet including but not limited to Chinese characters, Japanese characters and/or letters, Arabic letters and the like.

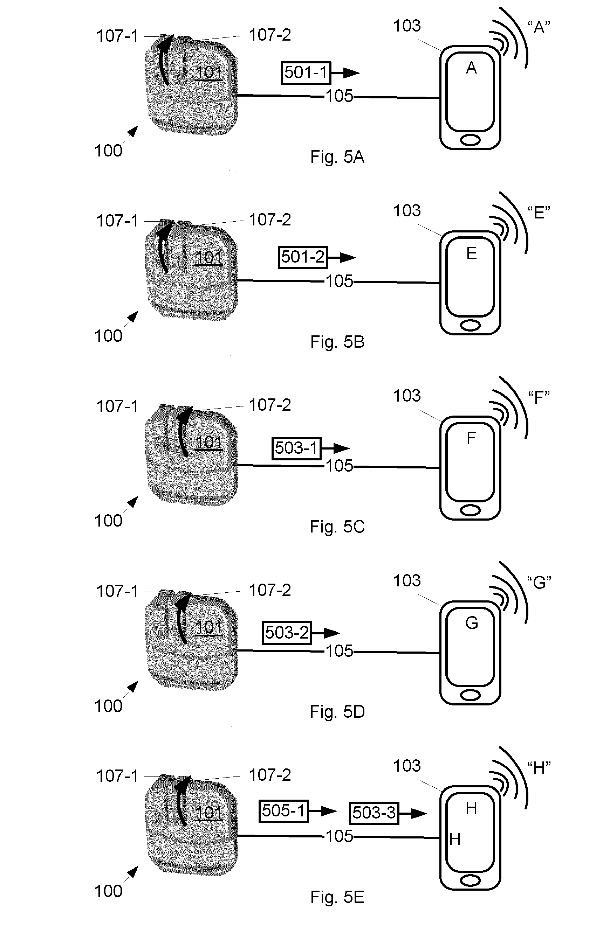

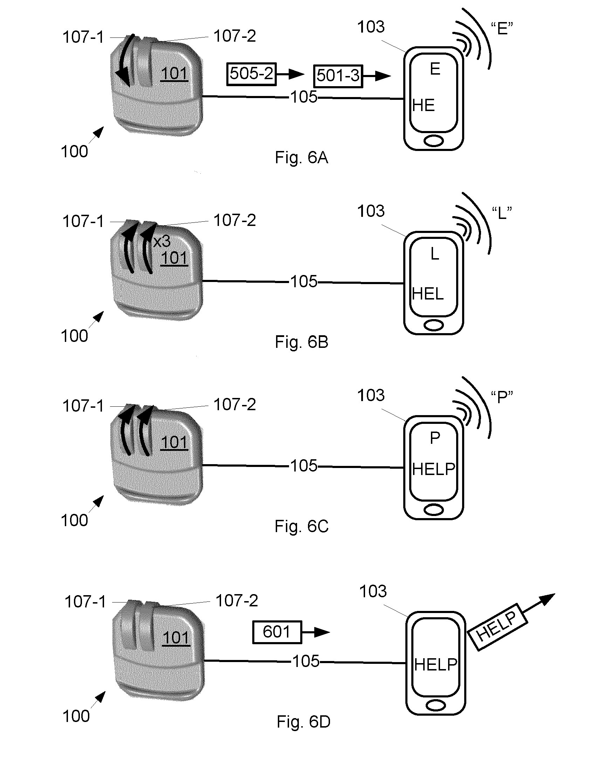

In any event, attention is next directed to Figs. 5A-5E, 6A-6D, which depict system 100 in operation. Each of Figs. 5A-5E, 6A-6D is substantially similar to Fig.1 with like elements having like numbers. Indeed, Figs. 5A-5E and 6A-6D depict a non-limiting example in which the word "HELP" is spelled at device 103 using device 101.

Specifically, Figs. 5A-5E depict selection of the letter "H" in list 350. Figs. 5A and 5B depicts actuation of input element 107-1 to scroll to the letter "E" in list 350. Specifically, as depicted in Fig. 5A, input element 107-1 is actuated a first time to scroll to group 401-1 and specifically "A" in list 350: for example input element 107-1 is rotated in a direction indicated by the arrow in Fig. 5A. When input element 107-1 is actuated, an indicator 501-1 is transmitted to device 103; specifically, indicator 501-1 comprises an indicator of a coarse selection in list 350, which is transmitted to device 103 via interface 201, the coarse selection provided at device 103. For example, upon receipt of indicator 501-1, device 103 coarsely scrolls through list 350. As indicator 501-1 is the first indicator transmitted, the first element of the first group 401-1, "A", is selected and one or more of display 303 and speaker 305 is controlled to provide an indication of the coarse selection: in other words, one or more of the letter "A" is rendered at display 303 and/or speaker 305 is controlled to output sound data comprising "A".

Then, as depicted in Fig. 5B, input element 107-1 is actuated a second time to scroll to the next group 401-2 in list 350. Specifically, input element 107-1 is actuated a second time to scroll to "E" in list 350 (e.g. rotated in the direction of the arrow of Fig. 5B), which begins group 401-2: when input element 107-1 is actuated, an indicator 501-2 is transmitted to device 103; specifically, indicator 501-2 comprises an indicator of a coarse selection in list 350, which is transmitted to device 103 via interface 201, the coarse selection provided at device 103. For example, upon receipt of indicator 501-2, device 103 coarsely scrolls from the first element of group 401-1 to the first element of group 401-2 in list 350, i.e. "A" to "E", skipping letters "B" through "D". "E" is hence coarsely selected and one or more of display 303 and speaker 305 is controlled to provide an indication of the coarse selection: in other words, one or more of the letter "E" is rendered at display 303 and/or speaker 305 is controlled to output sound data comprising "E".

It is appreciated that if input element 107-1 is actuated a further time, then "I" would have been the next element finely selected as "I" is first element in the next group 401-3. Similarly actuating 107-1 in a direction opposite to that of Figs. 5A, 5B can cause reselection of elements "E" and "A". In this manner elements "A", E", "I", "O", and "U" can be selected by actuating input element 107-1 in given directions (e.g. backwards and forwards scrolling).

In any event, when "E" is the last element selected, as depicted in Fig. 5C, input element 107-2 is then actuated (e.g. rotated in the direction of the arrow of Fig. 5C) which causes the interface 201 to transmit an indicator 503-1 comprising a fine selection of the elements of list 350, the fine selection provided at device 103. Specifically, when input element 107-2 is actuated while the first element of group 401-2 was the last coarsely selected group, (i.e. "E" was the last coarse selection), upon receipt of indicator 503-1 at device 103, device 103 finely scrolls from "E" to "F" within group 401-2 in list 350, i.e. the next element in list 350. "F" is hence finely selected and one or more of display 303 and speaker 305 is controlled to provide an indication of the fine selection: in other words, one or more of the letter "F" is rendered at display 303 and/or speaker 305 is controlled to output sound data comprising "F".

Similarly, as depicted in Fig. 5D, when input element 107-2 is actuated a second time (e.g. rotated in the direction of the arrow of Fig. 5D), interface 201 transmits an indicator 503-2 comprising a fine selection of the elements of list 350, the fine selection provided at device 103. Specifically, when input element 107-2 is actuated while "F" was the last fine selection, upon receipt of indicator 503-2 at device 103, device 103 finely scrolls from "F" to "G" in list 350, the next element in list 350. "G" is hence finely selected and one or more of display 303 and speaker 305 is controlled to provide an indication of the fine selection: in other words, one or more of the letter "G" is rendered at display 303 and/or speaker 305 is controlled to output sound data comprising "G".

Finally, as depicted in Fig. 5E, when input element 107-2 is actuated a third time (e.g. rotated in the direction of the arrow of Fig. 5E), interface 201 transmits an indicator 503-3 comprising a fine selection of the elements of list 350, the fine selection provided at device 103. Specifically, when input element 107-2 is actuated while "G" was the last fine selection, upon receipt of indicator 503-3 at device 103, device 103 finely scrolls from "G" to "H" in list 350, the next element in list 350. "H" is hence finely selected and one or more of display 303 and speaker 305 is controlled to provide an indication of the fine selection: in other words, one or more of the letter "H" is rendered at display 303 and/or speaker 305 is controlled to output sound data comprising "H".

However, as it is desired to spell the word "HELP", it is appreciated that "H" is then to be stored, for example in buffer 360 at non-volatile storage 312, an indicator 505-1 is transmitted from device 101 to device 103 to indicate that the element of list last selected is to be stored. Indicator 505-1 can be transmitted via any suitable actuation of one or more of input elements 107: for example, indicator 505-1 can be transmitted when concurrent actuation of input elements 107 is detected at device 101 (e.g. both input elements 107 are rotated at the same time) and/or when a given actuation of one or more of input elements 107 is detected (e.g. one or more of input elements 107 are rotated in a given sequence such as a rapid back and forth rotation of one or more of input elements 107). In implementations where one or more input elements 107 comprises a click wheel, one or more of input elements 107 can be clicked to cause transmission of indicator 505-1.

In any event, once "H" is saved in buffer 360, "H" can be optionally rendered at display 103 to indicate buffer storage of the element of list 350, for example on a different line from the selection rendered when indicators 503 are received.

It is appreciated that if input element 107-2 had been actuated a further time, then "I" would have been the next element finely selected as "I" is the next element in list 350, regardless of "I" being the first element of the next group 401-3.

Similarly, it is appreciated that reverse actuation of input element 107-2 can cause the previous element of list 350 to be selected: in other words, "G" can be reselected by rotating input element 107-2 in a direction opposite to that of Figs. 5C-5E.

Hence it is appreciated that, in these implementations, interface 201 is generally enabled to transmit an indication 501, 503 of one or more the coarse selection and the fine selection, indication 501, 503 for processing at device 103 such that device 103 selects a given element from list 350 in response to receiving indication 501, 503.

Attention is next directed to Fig. 6A which depicts selection of the letter "E", presuming the starting position in list 350 is the letter "H". Input element 107-1 is actuated (e.g. rotated) in a direction opposite that of Figs. 5A, 5B, indicating a coarse backwards scroll through list 350. Indicator 501-3 is then transmitted to device 103 indicating a backwards coarse selection of elements in list 350. In other words, rather than scroll to elements adjacent "H" in list 350, a coarse scroll to an element which begins one of groups 401 is indicated, and specifically "E" which begins the group of which "H" is a part: group 401-2. Further actuation of input element 107-1 can cause coarse selection of any of elements which begin groups 401.

However, as "E" selected, "E" can then be stored in buffer 360 by transmission of indicator 505-2, similar to indicator 505-1 as described above.

In any event, by actuation of each input element 107-1, 107-2, coarse and fine selection of elements from list 350 can be implemented, for example to spell words using letters from list 350.

As a further example, in Fig. 6B, actuation of input element 107-1 occurs to coarsely select "I", which is followed by three actuations of input element 107-2 to finely select "L" and store "L" in buffer 360. It is appreciated that each actuation of input element 107-2 can comprise rotating the corresponding wheel through a given number of degrees. Hence, the three actuations of input element 107-2 can be continuous as the wheel rotates through three times the given number of degrees. While indicators transmitted from device 101 to device 103 are not depicted in Fig. 6B for clarity, it is appreciated that such indicators are nonetheless present.

Similarly, in Fig. 6C, actuation of input element 107-1 occurs to coarsely select "O", which is followed by actuation of input element 107-2 to finely select "P" and store "P" in buffer 360. While indicators transmitted from device 101 to device 103 are not depicted in Fig. 6C for clarity, it is appreciated that such indicators are nonetheless present. Hence, the word "HELP" is spelled via coarse and fine selection of elements of list 350 by respective actuation of input elements 107-1, 107-2.

In some implementations, as depicted in Fig. 6D, a further indication 601 can be transmitted from device 101 to device 103 to cause device 103 to transmit the buffered data, (i.e. "HELP") via a communication network (not depicted). Indication 601 can be transmitted when a given actuation of one or more of input elements 107 occurs at device 101, for example, one or more of input elements 107 are actuated in a given sequence associated with transmitting indication 601 to device 103.

Indeed, it is further appreciated that control of device 103 can occur via device 101 by transmitting various indicators similar to indicators 501, 503, 505, 601 from device 101 to device 103. For example, a given sequence of actuations of input elements 107 can cause device 103 to enter a message mode, such that one or addresses to which messages can be transmitted are spelled using input elements 107, and the messages subsequently composed and transmitted using input elements 107.

Alternatively, device 101 can be used to compose documents for storage at device 103. Indeed, it is appreciated that device 101 can be used to select text, numbers, symbols, words and the like for any application at device 103 where text, numbers, symbols, words and the like are to be received, including but not limited to messaging applications, word processing applications, spreadsheet applications, gaming applications, and the like.

In some implementations, a given sequence of actuations of input elements 107 can cause device 103 to provide a menu from which subsequent actions can be selected (e.g., enter/exit a word prediction mode, enter/exit an email mode, enter/exit a word processing mode and the like) via further actuation of input elements 107.

Indeed, it is further appreciated that as device 101 as depicted heretofore comprises only two input elements 107, device 101 can be activated using only one hand and/or using only one or more fingers. Hence, device 101 can be used to control device 101 in situations where mobility of a user using devices 101, 103 is limited. In addition, device 101 can be implemented in a very small and lightweight device. Further, in situations where a user has limited vision and/or limited access to display 303, providing output at device 103 via speaker 305 enables the user to control device 103 using device 101 without viewing display 303.

It is yet further appreciated that while list 350 depicted herein comprises only letters arranged in alphabetical order, in other implementations list 350 can comprise any suitable combination of letters, numbers, symbols, words and the like.

Indeed, in some implementations, one or more of devices 101, 103 can comprise a predictive word algorithm and when one or more letters are buffered, one or more of device 101, 103 can enter a predictive word mode in order to coarsely and finely select word a list rather than letters. Using the example above, once "HE" is buffered, a list of words beginning with "HE" can be provided, and the list can be coarsely and finely scrolled through until the desired word is found. For example, the list "HEAT HEART HEBRON HECKLE HEFTY HELP HEMP HESITANT" could be provided and grouped into groups of two or more words; input elements 107 can be used to coarsely and finely scroll through the list until "HELP" is selected. However, if the desired word is not in the list of words, a letter selection mode can be entered to continue spelling a desired word.

In any event, regardless of the elements of list 350, whether letters, symbols, words or the like, it is appreciated that: list 350 can comprise a textual list with the elements arranged in alphabetical order; the coarse selection can comprise a selection of groups 401 of the elements in the textual list; and the fine selection can comprise a selection of individual elements of a last selected group 401 in the coarse selection.

It is yet further appreciated that while in system 100, device 103 stores list 350 and indications 501, 503, 505, 601 are merely indications of actuations of input elements 107, in other implementations, device 101 can store list 350, or similar, and indications transmitted from between the devices can comprise indications of selection from list 350.

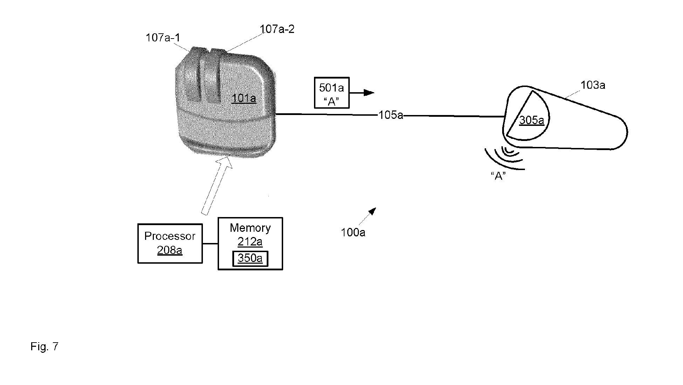

For example, attention is next directed to Fig. 7 which depicts a system 100a, substantially similar to system 100 with like elements having like numbers, however with an "a" appended thereto. However, in these implementations, device 103a comprises a speaker 305a similar to speaker 305, and does not comprise a display. For example, device 103a can comprise one or more of headphones and a Bluetooth™ headset in communication with device 101a via link 105a. When device 103a comprises headphones, link 105a can be a wired link (e.g. headphones which plug into device 101a).

Further, device 101a comprises input elements 107a-1, 107a-2. Device 101a further comprises: a memory 212a storing a list 350a similar to list 350; memory 212a can be similar to non-volatile storage 212; and a processor 208a, similar to processor 208, enabled to select the elements from list 350a upon actuation of one or more of first input element 107a-1 and input element 107a-2. It is appreciated that while memory 212a and processor 208a are depicted outside of device 101a in Fig.7, memory 212a and processor 208a are located inside device 101a as indicated by the arrow.

In any event, input elements 107a are used to make a coarse and/or fine selection from list 350a, as described above, however indications 501a of coarse and/or fine selection comprise data that can be output at speaker 305a. For example when "A" is selected, sound data comprising "A" is transmitted in indication 501a, as depicted, such that sound data comprising "A" is output at speaker 305a. It is further appreciated that, in these implementations, processor 208a is further enabled to generate and transmit sound data in indication 501a.

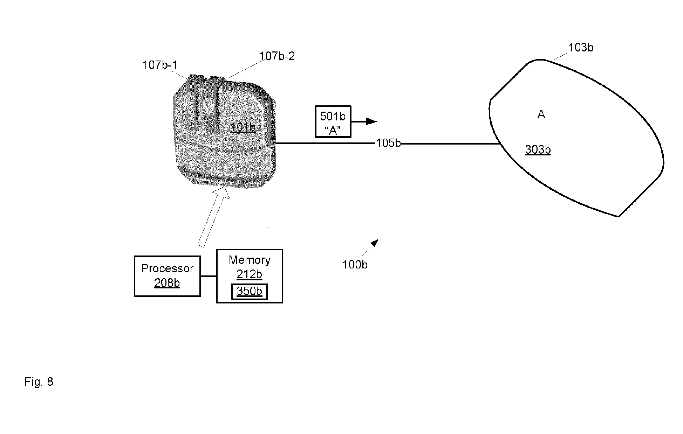

Attention is next directed to Fig. 8 which depicts a system 100b, substantially similar to system 100a with like elements having like numbers, however with a "b" appended thereto. However, in these implementations, device 103b comprises a visual output device 303b, including but not limited to one or more of a display similar to display 303, a heads up display (for example at a windshield, sunglasses, a canopy etc.), and the like. In general, device 103b does not comprise a speaker.

Further, device 101b comprises input elements 107b-1, 107b-2. Device 101b further comprises: a memory 212b storing a list 350b similar to list 350; memory 212b can be similar to non-volatile storage 212; and a processor 208b, similar to processor 208, enabled to select the elements from list 350b upon actuation of one or more of first input element 107b-1 and input element 107b-2. It is appreciated that while memory 212b and processor 208b are depicted outside of device 101b in Fig.8, memory 212b and processor 208b are located inside device 101b as indicated by the arrow.

In any event, input elements 107b are used to make a coarse and/or fine selection from list 350a, as described above, however indications 501b of coarse and/or fine selection comprise data that can be output at visual output device 303b. For example when "A" is selected, data comprising "A" is transmitted in indication 501b, as depicted, such that data comprising "A" is rendered at visual output device 303b. It is further appreciated that, in these implementations, processor 208a is further enabled to generate and transmit data that can be rendered at visual output device 303b in indication 501a.

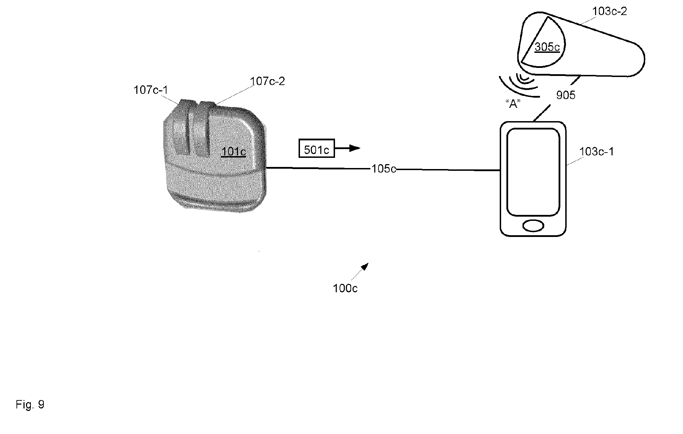

Attention is next directed to Fig. 9, which depicts a system 100c, substantially similar to system 100 with like elements having like numbers, however with a "c" appended thereto. However, in these implementations system 100c comprises a first output device 103c-1 and a second output device 103c-1. First output device 103c-1 can be similar to device 103 while second output device 103c-2 can be similar to output device 103a, and hence comprises a speaker 305c. Devices 103c are in communication via a link 905 which can be similar to link 105c and hence can be wired, wireless and/or a combination thereof.

In any event, input elements 107c-1, 107c-2 are used to make a coarse and/or fine selection from a list, as described above, and device 101c transmits indications 501c of coarse and/or fine selection to device 103c-1 via link 105c. However, in these implementations, device 103c-1 converts indications 501c to sound data and in turn transmits sound data to device 103c-2 to be output at speaker 305c thereby providing feedback for the coarse/fine selection.

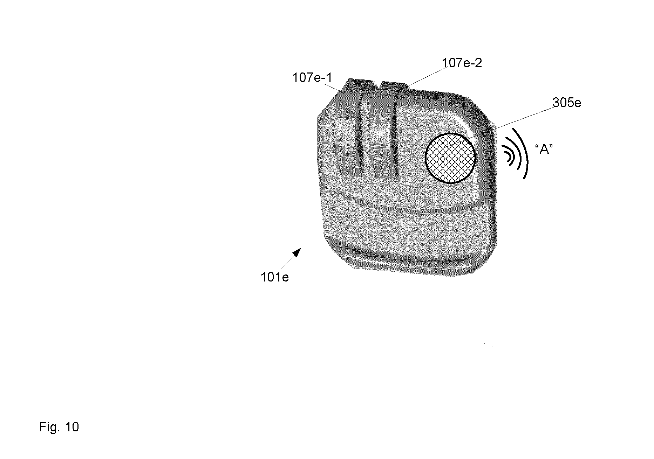

Attention is next directed to Fig. 10, which depicts a device 101e, substantially similar to device 101 with like elements having like numbers, however with an "e" appended thereto. However, in these implementations, device 101e comprises both input elements 107e-1, 107e-2 and at least one output device, specifically, as depicted, a speaker 305e similar to speaker 305. Coarse and fine selections can be output at speaker 305e, for example as sound data (e.g. "A" as depicted). While not depicted, it is appreciated that coarse and fine selections can be transmitted to a device similar to device 103 such that selected elements from a list can be buffered and/or stored and/or transmitted as a message as described above.

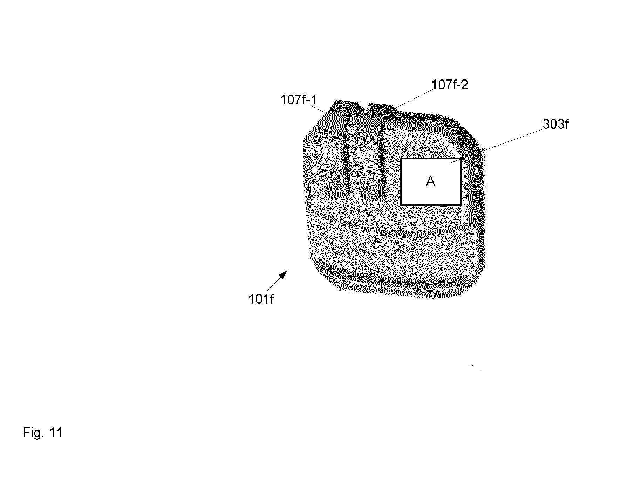

Attention is next directed to Fig. 11, which depicts a device 101f substantially similar to device 101 with like elements having like numbers, however with an "f" appended thereto. However, in these implementations, device 101f comprises both input elements 107f-1, 107f-2 and at least one output device, specifically, as depicted, a display 303f similar to display 303. Coarse and fine selections can be rendered at display 303f (e.g. text "A" as depicted).While not depicted, it is appreciated that coarse and fine selections can be transmitted to a device similar to device 103 such that selected elements from a list can be buffered and/or stored and/or transmitted as a message as described above.

In yet further implementations, either of devices 101e, 101f can comprise both a speaker and a display. Indeed, it is appreciated that devices 101e, 10lf can comprise any suitable combination of feedback and/or output devices, including but not limited to one or more of a visual output device, a display, a heads-up display, an audible output device, and a speaker. In yet further implementations, devices 101e, 101f can comprise and/or can be connectable to headphones, a second mobile electronic device, and a Bluetooth™ device. In these implementations, it is appreciated that headphones, a second mobile electronic device, and a Bluetooth™ device can be connected to devices 101e, 101f via any suitable wired and/or wireless link.

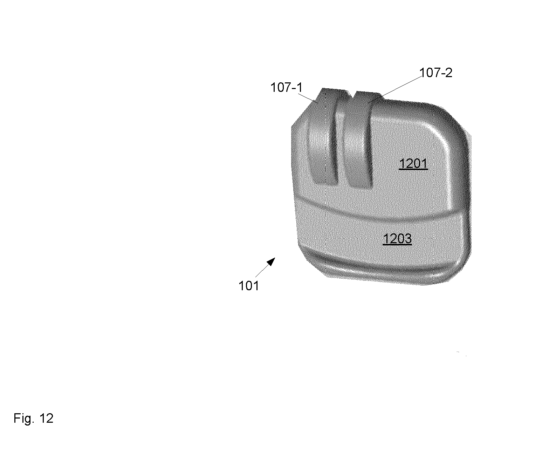

Attention is next directed to Fig. 12 which depicts further details of device 101. Specifically, device 101 comprises input elements 107 and a body 1201, input elements 107 mounted on body 1201. Further, device 101 comprises one or more grooves 1203 for holding device 101 between fingers. It is appreciated that while only one groove 1203 is depicted in Fig. 12, a second groove can be located on a side opposite groove 1203 such that device 101 can easily be inserted between two fingers and input elements 107 operated with a thumb of the same hand.

Heretofore, only input elements comprising wheels actuatable via rotation have been described. However, any suitable combination of input elements is within the scope of present implementations.

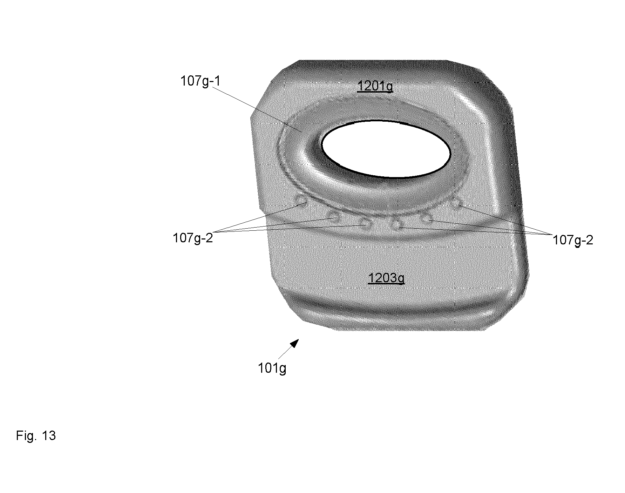

For example, attention is next directed to Fig. 13 which depicts a device 101g similar to device 101 with like elements having like numbers, however with a "g" appended thereto. Hence, device 101g comprises a body 1201g, at least one groove 1203g, a first input element 107g-1 for coarse selection of elements from a list and one or more second input elements 107g-2 for fine selection of elements from the list. As depicted, device 101 g comprises six input elements 107g-2, however it is appreciated that any suitable number of input elements 107g-2 are within the scope of present implementations, including but not limited to one input element 107g02.

Specifically, input element 107g-1 comprises at least one of a capacitive pad and a touch sensitive pad for coarsely scrolling through the list. Input element 107g-1 is oval in shape, and further defines an aperture through body 1201 g for ergonomic access to input element 107g-1. However the shape of input element 107g-1 is appreciated to be non-limiting and any shape of input element 107g-1 is within the scope of present implementations.

Input elements 107g-2 comprise buttons, each of which can be assigned to a specific element in a given group of a list once a coarse selection has been made: using list 350 as an example, once one of groups 401 is selected using input element 107g-1, a first button can be assigned to a first element in the selected group, a second button can be assigned to a second element in the second group and so on. If there are more buttons than elements in the selected group, then the extraneous buttons can have not effect when actuated.

Hence, to make a coarse selection, input element 107g-1 is actuated to effect a coarse selection of one of groups 401 as described above, and then an input element 107g-2 corresponding to an element of the selected group can be actuated to select the corresponding element.

Alternatively, in implementations where device 101g comprises only one button, the button can be pressed repeatedly to finely scroll through elements in the selected group 401.

In any event, it is appreciated that device 101g comprises a capacitive pad/touch sensitive pad for effecting coarse selections from a list and at least one button for effecting additional selections from the list.

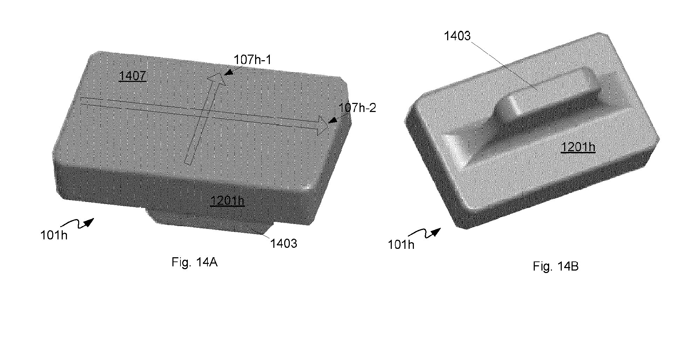

Attention is next directed to Figs. 14A and 14B which depicts top and bottom perspective views of a device 101h similar to device 101 with like elements having like numbers, however with an "h" appended thereto. Device 101h comprises a body 1201h. Rather than a handle, device 101h comprises a handle 1403 for holding device 101h, for example between two fingers. Further, handle 1403 extends from a bottom side of body 1201h.

Device 101h further comprises a touchpad 1407 wherein a first input element 107h-1 comprises detection of actuation of touchpad 1407 in a first direction as indicated by the arrow associated with input element 107h-1 in Fig. 14A; and a second input element comprises 107h-1 detection of actuation of touchpad in a second direction different from the first direction as indicated by the arrow associated with input element 107h-2 in Fig. 14A. Hence, for example, touchpad 1407 can be swiped in a first direction to effect coarse selection from a list, wherein with each swipe in the first direction an indication of coarse selection is transmitted to an output device similar to device 103. It is appreciated that input element 107h-1 comprises the portion of touchpad 1407 that is swiped in the first direction. Similarly, touchpad 1407 can then be swiped in a second direction, for example perpendicular to the first direction, to effect fine selection from the list, wherein with each swipe in the second direction an indication of fine selection is transmitted to an output device similar to device 103. It is appreciated that input element 107h-2 comprises the portion of touchpad 1407 that is swiped in the second direction.

Attention is next directed to Fig. 15A which depicts a device 101i similar to device 101 with like elements having like numbers with however an "i" appended thereto. Device 101i comprises a body 1201i, a groove 1203i, and an input element 107i comprising a clickable round capacitive touchpad. Further input element 107i is enabled for at least two modes: a coarse selection mode and a fine selection mode. For example, attention is directed to Figs. 15A and 15B which are each similar to Fig. 15 with like elements having like numbers. In the following example, it is assumed that device 101i is used to select elements from list 350 comprising groups 401, as described above.

In Fig. 15B, input element 107i is in a coarse selection mode and the first element in each group 401 is depicted on input element 107i to indicate which position on input element 107i that is to be touched to select the corresponding group. It is further appreciated that symbols arrange in groups beginning with "#" and "!" can also be selected, as well as a menu (i.e. "MENU"); selection of "MENU" can cause an indication of menu selection to be transmitted to an output device, such as device 103, which in turn provides a menu of selectable options, such as "COMPOSE EMAIL", "SWITCH LIST" to switch between lists, "ENABLE WORD PREDICTION" and the like. In any event, as input element 107i is actuated to select a given group 401, for example group 401-2 beginning with "E" as indicated by the broken circle around "E" in Fig. 15B, input element 107i can then be actuated to switch to a fine selection modem for example by clicking input element 107i. The fine selection mode is depicted in Fig. 15C in which elements of the selected group 401, for example group 401-2, are selectable. For example, as depicted in Fig. 15C, "H" is selected by actuating input element 107i until "H" is reached in group 401-2 and then input element 107i is again actuated, for example by clicking input element 107i. For each selection an indication of selection is transmitted to a given output device, such as device 103, where selections can be buffered as described above.

Hence, device 107i comprises an input element 107i for selection which can be placed into at least two modes: a coarse selection mode and a fine selection mode.

Fig. 15D depicts a side view of device 107i showing grooves 1203i in more detail. It is appreciated that grooves 1203i are aligned with one another on opposite sides of body 1201i, and further extend from edge to edge across body 1203i. It is further appreciated that while grooves 1203i are depicted as straight, in other implementations grooves 1203i can be curved and/or ergonomically shaped to better fit between two fingers, similar to groove 1203 of device 101.

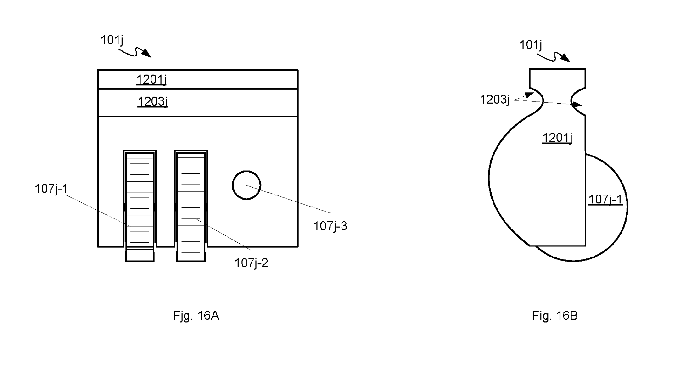

Attention is next directed to Figs. 16A and 16B which depict front and side views respectively of a device 101j similar to device 101 with like elements having like numbers with however a "j" appended thereto. Device 101j comprises a body 1201j, a groove 1203j, and input elements 107j-1, 107j-2, 107j-3. Input elements 107j-1, 107j-2 comprise wheels for coarse and fine selection of elements from a list as described above. Input element 107j-3 comprises a button for providing an indication to buffer a selection of a given element from the list as described above. It is appreciated each input element 107j is mounted at body 1201j and that input elements 107j-1, 107j-2 are mounted in grooves in body 1201j.

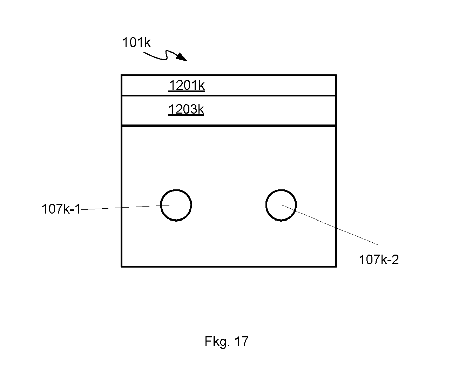

Attention is next directed to Fig. 17 which depicts a device 101k similar to device 101 with like elements having like numbers with however a "k" appended thereto. Device 101k comprises a body 1201k, a groove 1203k, and input elements 107k-1, 107k-2. Input elements 107k-1, 107k-2 comprise buttons for coarse and fine selection of elements from a list as described above. Actuation of each button causes respective indications of coarse and fine selection to be transmitted to an output device, such as output device 103 described above. For example, actuation of input element 107k-1 causes coarse scrolling through groups 401 of list 350 as described above, while actuation of input element 107k-2 causes fine scrolling through groups 401 of list 350 as described above. As buttons are actuatable in one direction (i.e. they can be pressed) when a last group and/or element in a group is reached, a next actuation of a button causes the first group and/or first element in a group to be selected. Concurrent actuation of both input elements 107k can indicate buffering of a currently selected element of list 350.

In summary, the input elements described here in can comprise any combination of one more wheels, buttons, touchpads, capacitive pad, scroll keys, thumbwheels, tabbed scroll keys, directional pads and the like. For example, one of a first input element and a second input element could comprises one or more of a wheel, a touch pad and a capacitive pad and the other of the first input element and the second input element could comprises at least one button. Further, one or more of the input elements can be enabled to switch between modes such that a single input element can perform the function of two input elements, a first input element effectively comprising a second input element.

Heretofore, implementations where device 101 and the like are held in a user's hand have been described, however, it is appreciated that device 101 and the like can be enabled for mounting on one or more of clothing, a belt, jewellery, a watch, a necklace a firearm, and the like. For example, in these implementations, device 101 can comprise a clip, hook, strap or the like for mounting to clothing, a belt, jewellery, a watch, a necklace, a firearm and the like. In one embodiment, device 101 may include a hoop such that device 101 may be worn on a finger like a ring; device 101 may thereby be secured proximate to the palm of the hand and input elements may be actuated with the thumb. Although device 101 may have any dimensions, some embodiments may be smaller than a typical key fob. Furthermore, device 101 may be constructed from any material or materials, including but not limited to ceramics, metals, plastics and the like, and may include materials that supply aesthetic as well as functional benefits.

It is yet further appreciated that device 101 and the like can be sealed against one or more of contaminants, water and moisture. In other words, device 101 can be ruggedized for military/outdoors environments for use in combat situations where silent communication with limited manual mobility can occur, or where environmental conditions may be harsh. Sealing can include hermetic sealing as well as sealing to make an element resistant to contaminants. Sealing can be achieved by, for example, use of a gasket or cover or sealant or precise fittings of components. Input elements such as some touch sensitive pads, for example, may include a membrane that shields any electronic or moving parts from environmental contaminants, and some types of buttons include a flexible dome over or under the button that resists environmental contaminants.

Implementation of one or more embodiments may result in one or more benefits, some of which have been mentioned already. Further, some of the potential benefits may weigh against what may be perceived as potential drawbacks. For example, a mobile electronic device with a reduced number of input elements may be deemed more cumbersome to use than a keyboard, but the mobile electronic device may take up less space and weight than a keyboard, and may be more robust.

In any event a mobile electronic device is provided comprising: a communication interface enabled to communicate with an output device enabled to provide feedback for selecting elements from a list; a first input element which, when actuated, causes the communication interface to transmit a coarse selection of the elements of the list, the coarse selection provided at the output device; and a second input element which, when actuated, causes the communication interface to transmit a fine selection of the elements of the list, the fine selection provided at the output device. Such a device generally enables selection of elements from a list silently and/or using limited manual resources. In particular, present implementations enabled one handed text entry at a mobile electronic device; when aural feedback is provided, rather than visual feedback, one handed text entry can occur without a user viewing a display. Such implementations can be further useful to users who are visually impaired, either for physical reasons (e.g. blind persons) or for contextual reasons (e.g. users who may wish to enter text while walking down a street and who do want to remain visually alert to their environment and hence do not want to look at a display screen; a further example is a user entering text in the dark),

Those skilled in the art will appreciate that in some implementations, the functionality of devices 101, 101a, 101b, 101c, 101e, 101f, 101g, 101h, 101i, 101j, 101k, 103, 103a, 103b, 103c-1, 103c-2 can be implemented using pre-programmed hardware or firmware elements (e.g., application specific integrated circuits (ASICs), electrically erasable programmable read-only memories (EEPROMs), etc.), or other related components. In other implementations, the functionality of devices 101, 101a, 101b, 101c, 101e, 101f, 101g, 101h, 101i, 101j, 101k, 103, 103a, 103b, 103c-1, 103c-2 can be achieved using a computing apparatus that has access to a code memory (not shown) which stores computer-readable program code for operation of the computing apparatus. The computer-readable program code could be stored on a computer readable storage medium which is fixed, tangible and readable directly by these components, (e.g., removable diskette, CD-ROM, ROM, fixed disk, USB drive). Furthermore, it is appreciated that the computer-readable program can be stored as a computer program product comprising a computer usable medium. Further, a persistent storage device can comprise the computer readable program code. It is yet further appreciated that the computer-readable program code and/or computer usable medium can comprise a non-transitory computer-readable program code and/or non-transitory computer usable medium. Alternatively, the computer-readable program code could be stored remotely but transmittable to these components via a modem or other interface device connected to a network (including, without limitation, the Internet) over a transmission medium. The transmission medium can be either a non-mobile medium (e.g., optical and/or digital and/or analog communications lines) or a mobile medium (e.g., microwave, infrared, free-space optical or other transmission schemes) or a combination thereof.

A portion of the disclosure of this patent document contains material which is subject to copyright protection. The copyright owner has no objection to the facsimile reproduction by any one of the patent document or patent disclosure, as it appears in the Patent and Trademark Office patent file or records, but otherwise reserves all copyrights whatsoever.

Persons skilled in the art will appreciate that there are yet more alternative implementations and modifications possible, and that the above examples are only illustrations of one or more implementations. The scope, therefore, is only to be limited by the claims appended hereto.

## Claims

1. A mobile electronic device (101, 101a, 101b, 101c, 101e, 101f, 101g, 101h, 101i, 101j, 101k) comprising:
a communication interface (201) enabled to communicate with an output device (103, 103a, 103b, 103c-1, 103c-2, 105e, 305e, 303f), the output device (103, 103a, 103b, 103c-1, 103c-2, 105e, 305e, 303f) enabled to provide feedback for selecting elements from a list;
a first input element (107-1, 107a-1, 107b-1, 107c-1, 107e-1, 107f-1, 107g-1, 107h-1, 107i, 107j-1, 107k-1) which, when actuated, causes the communication interface (201) to transmit a coarse selection of the elements of the list, the coarse selection provided at the output device (103, 103a, 103b, 103c-1, 103c-2, 105e, 305e, 303f); and
a second input element (107-2, 107a-2, 107b-2, 107c-2, 107e-2, 107f-2, 107g-2, 107h-2, 107i, 107j-2, 107k-2) which, when actuated, causes the communication interface (201) to transmit a fine selection of the elements of the list, the fine selection provided at the output device (103, 103a, 103b, 103c-1, 103c-2, 105e, 305e, 303f).

2. The mobile electronic device (101, 101a, 101b, 101c, 101e, 101f, 101g, 101h, 101i, 101i, 101k) of claim 1, wherein the communication interface (201) comprises one or more of: a wireless communication interface (201) for wireless communication with the output device (103, 103a, 103b, 103c-1, 103c-2, 105e, 305e, 303f); and a wired communication interface (201) for wired communication with the output device (103, 103a, 103b, 103c-1, 103c-2, 105e, 305e, 303f).

3. The mobile electronic device (101, 101a, 101b, 101c, 101e, 101f, 101g, 101h, 101i, 101j, 101k) of any of claims 1 or 2, further comprising the output device (103, 103a, 103b, 103c-1, 103c-2, 105e, 305e, 303f), and the output device (103, 103a, 103b, 103c-1, 103c-2, 105e, 305e, 303f) comprises one or more of a visual output device, a display, a heads-up display, an audible output device, a speaker, headphones, a second mobile electronic device, and a Bluetooth™ device.

4. The mobile electronic device (101, 101a, 101b, 101c, 101e, 101f, 101g, 101h, 101i, 101j, 101k) of any of claims 1 to 3, further comprising:
a memory storing the list; and,
a processor enabled to select the elements from the list upon actuation of one or more of the first input element (107-1, 107a-1, 107b-1, 107c-1, 107e-1, 107f-1, 107g-1, 107h-1, 107i, 107j-1, 107k-1) and the second input element (107-2, 107a-2, 107b-2, 107c-2, 107e-2, 107f-2, 107g-2, 107h-2, 107i, 107j-2, 107k-2).

5. The mobile electronic device (101, 101a, 101b, 101c, 101e, 101f, 101g, 101h, 101i, 101j, 101k) of any of claims 1 to 4, wherein the communication interface (201) is enabled to transmit an indication of one or more of the coarse selection and the fine selection, the indication for processing at the output device (103, 103a, 103b, 103c-1, 103c-2, 105e, 305e, 303f) such that the output device (103, 103a, 103b, 103c-1, 103c-2, 105e, 305e, 303f) selects a given element from the list in response to receiving the indication.

6. The mobile electronic device (101, 101a, 101b, 101c, 101e, 101f, 101g, 101h, 101i, 101j, 101k) of any of claims 1 to 5, wherein:
the list comprises a textual list with the elements arranged in alphabetical order;
the coarse selection comprises a selection of groups of the elements in the textual list; and
the fine selection comprises a selection of individual elements of a last selected group in the coarse selection.

7. The mobile electronic device (101, 101a, 101b, 101c, 101e, 101f, 101g, 101h, 101i, 101j, 101k) of any of claims 1 to 6, wherein the first input element (107-1, 107a-1, 107b-1, 107c-1, 107e-1, 107f-1, 107g-1, 107h-1, 107i, 107j-1, 107k-1) comprises a first wheel actuatable via rotation to effect the coarse selection, and the second input element (107-2, 107a-2, 107b-2, 107c-2, 107e-2, 107f-2, 107g-2, 107h-2, 107i, 107j-2, 107k-2) comprises a second wheel actuatable via rotation to effect the fine selection.

8. The mobile electronic device (101, 101a, 101b, 101c, 101e, 101f, 101g, 101h, 101i, 101j, 101k) of any of claims 1 to 7, further comprising at least one button (107g-2) for effecting additional selections from the list.

9. The mobile electronic device (101, 101a, 101b, 101c, 101e, 101f, 101g, 101h, 101i, 101j, 101k) of claim 1, wherein one of the first input element (107-1, 107a-1, 107b-1, 107c-1, 107e-1, 107f-1, 107g-1, 107h-1, 107i, 107j-1, 107k-1) and the second input element (107-2, 107a-2, 107b-2, 107c-2, 107e-2, 107f-2, 107g-2, 107h-2, 107i, 107j-2, 107k-2) comprises one or more of a wheel, a touch pad and a capacitive pad and the other of the first input element (107-1, 107a-1, 107b-1, 107c-1, 107e-1, 107f-1, 107g-1, 107h-1, 107i, 107j-1, 107k-1) and the second input element (107-2, 107a-2, 107b-2, 107c-2, 107e-2, 107f-2, 107g-2, 107h-2, 107i, 107j-2, 107k-2) comprises at least one button.

10. The mobile electronic device (101, 101a, 101b, 101c, 101e, 101f, 101g, 101h, 101i, 101j, 101k) of claim 1, wherein the first input element (107i) comprises the second input element (107i), wherein the first input element (107i) can be placed in a coarse selection mode for effecting the coarse selection of the elements of the list and the first input element (107i) can be further placed in a fine selection mode to behave as the second input element (107i) for effecting the fine selection of the elements of the list.

11. The mobile electronic device (101, 101a, 101b, 101c, 101e, 101f, 101g, 101h, 101i, 101j, 101k) of claim 1, further comprising a touchpad (1407) wherein the first input element (107h-1) comprises detection of actuation of the touchpad (1407) in a first direction and the second input element (107h-2) comprises detection of actuation of the touchpad in a second direction different from the first direction.

12. The mobile electronic device (101, 101a, 101b, 101c, 101e, 101f, 101g, 101h, 101i, 101j, 101k) of clam 1, wherein the first input element (107-1, 107a-1, 107b-1, 107c-1, 107e-1, 107f-1, 107g-1, 107h-1, 107i, 107j-1, 107k-1) and the second input element (107-2, 107a-2, 107b-2, 107c-2, 107e-2, 107f-2, 107g-2, 107h-2, 107i, 107j-2, 107k-2) each comprise one or more of: a wheel, a button, a touchpad, a touch sensitive pad, a capacitive pad, a scroll key, a thumbwheel, a tabbed scroll key, and a directional pad.

13. The mobile electronic device (101, 101a, 101b, 101c, 101e, 101f, 101g, 101h, 101i, 101j, 101k) of any of claims 1 to 12, further comprising a body (1201), the first input element (107-1, 107a-1, 107b-1, 107c-1, 107e-1, 107f-1, 107g-1, 107h-1, 107i, 107j-1, 107k-1) and the second input element (107-2, 107a-2, 107b-2, 107c-2, 107e-2, 107f-2, 107g-2, 107h-2, 107i, 107j-2, 107k-2) mounted on the body (1201), and one or more of grooves (1203) in the body for holding the electronic device between fingers and a handle (1403) for holding the mobile electronic device (101, 101a, 101b, 101c, 101e, 101f, 101g, 101h, 101i, 101j, 101k).

14. The mobile electronic device (101, 101a, 101b, 101c, 101e, 101f, 101g, 101h, 101i, 101j, 101k) of any of claims 1 to 13, further comprising apparatus for mounting the mobile electronic device (101, 101a, 101b, 101c, 101e, 101f, 101g, 101h, 101i, 101j, 101k) on one or more of clothing, a belt, jewellery, a watch, a necklace and a firearm.

15. The mobile electronic device (101, 101a, 101b, 101c, 101e, 101f, 101g, 101h, 101i, 101j, 101k) of any of claims 1 to 14, wherein the mobile electronic device (101, 101a, 101b, 101c, 101e, 101f, 101g, 101h, 101i, 101j, 101k) is sealed against one or more of contaminants, water and moisture.

## Amended claims

### Amended claims in accordance with Rule 137(2) EPC.

**1.** A mobile electronic device (101, 101a, 101b, 101c, 101e, 101f, 101g, 101h, 101i, 101j, 101k) comprising:
a communication interface (201) enabled to communicate with an output device (103, 103a, 103b, 103c-1, 103c-2, 105e, 305e, 303f), the output device (103, 103a, 103b, 103c-1, 103c-2, 105e, 305e, 303f) enabled to provide feedback for selecting elements from a list (350) which comprises a textual list with the elements arranged in alphabetical order, wherein the list (350) is arranged into groups;
a first input element (107-1, 107a-1, 107b-1, 107c-1, 107e-1, 107f-1, 107g-1, 107h-1, 107i, 107j-1, 107k-1) which, when actuated, causes the communication interface (201) to transmit a coarse selection of the elements of the list, the coarse selection provided at the output device (103, 103a, 103b, 103c-1, 103c-2, 105e, 305e, 303f), the coarse selection indicating a selection of a first element in a group of elements from the list (350); and
a second input element (107-2, 107a-2, 107b-2, 107c-2, 107e-2, 107f-2, 107g-2, 107h-2, 107i, 107j-2, 107k-2) which, when actuated, causes the communication interface (201) to transmit a fine selection of the elements of the list, the fine selection provided at the output device (103, 103a, 103b, 103c-1, 103c-2, 105e, 305e, 303f), the fine selection indicating a selection of at least a next element in the last selected group of elements in the coarse selection.

**2.** The mobile electronic device (101, 101a, 101b, 101c, 101e, 101f, 101g, 101h, 101i, 101j, 101k) of claim 1, wherein the communication interface (201) comprises one or more of: a wireless communication interface (201) for wireless communication with the output device (103, 103a, 103b, 103c-1, 103c-2, 105e, 305e, 303f); and a wired communication interface (201) for wired communication with the output device (103, 103a, 103b, 103c-1, 103c-2, 105e, 305e, 303f).

**3.** The mobile electronic device (101, 101a, 101b, 101c, 101e, 101f, 101g, 101h, 101i, 101j, 101k) of any of claims 1 or 2, further comprising the output device (103, 103a, 103b, 103c-1, 103c-2, 105e, 305e, 303f), and the output device (103, 103a, 103b, 103c-1, 103c-2, 105e, 305e, 303f) comprises one or more of a visual output device, a display, a heads-up display, an audible output device, a speaker, headphones, a second mobile electronic device, and a Bluetooth™ device.

**4.** The mobile electronic device (101, 101a, 101b, 101c, 101e, 101f, 101g, 101h, 101i, 101j, 101k) of any of claims 1 to 3, further comprising:
a memory storing the list (350); and,
a processor enabled to select the elements from the list (350) upon actuation of one or more of the first input element (107-1, 107a-1, 107b-1, 107c-1, 107e-1, 107f-1, 107g-1, 107h-1, 107i, 107j-1, 107k-1) and the second input element (107-2, 107a-2, 107b-2, 107c-2, 107e-2, 107f-2, 107g-2, 107h-2, 107i, 107j-2, 107k-2).

**5.** The mobile electronic device (101, 101a, 101b, 101c, 101e, 101f, 101g, 101h, 101i, 101j, 101k) of any of claims 1 to 7, further comprising at least one button (107g-2) for effecting additional selections from the list (350).

**6.** The mobile electronic device (101, 101a, 101b, 101c, 101e, 101f, 101g, 101h, 101i, 101j, 101k) of clam 1, wherein the first input element (107-1, 107a-1, 107b-1, 107c-1, 107e-1, 107f-1, 107g-1, 107h-1, 107i, 107j-1, 107k-1) and the second input element (107-2, 107a-2, 107b-2, 107c-2, 107e-2, 107f-2, 107g-2, 107h-2, 107i, 107j-2, 107k-2) each comprise one or more of: a wheel, a button, a touchpad, a touch sensitive pad, a capacitive pad, a scroll key, a thumbwheel, a tabbed scroll key, and a directional pad.
